(19) Europäisches Patentamt
European Patent Office
Office européen des brevets

(11) **EP 2 345 990 A1**

(12) **EUROPEAN PATENT APPLICATION**
published in accordance with Art. 153(4) EPC

(43) Date of publication:
**20.07.2011 Bulletin 2011/29**

(51) Int Cl.:
*G06Q 50/00* *(2006.01)*    *B65G 61/00* *(2006.01)*

(21) Application number: **09815917.1**

(22) Date of filing: **28.09.2009**

(86) International application number:
**PCT/JP2009/004931**

(87) International publication number:
**WO 2010/035498 (01.04.2010 Gazette 2010/13)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **29.09.2008  JP 2008250048**

(71) Applicant: **Japan Tobacco, Inc.**
**Tokyo 105-8422 (JP)**

(72) Inventor: **HIRAI, Sadayuki**
**Tokyo 105-8422 (JP)**

(74) Representative: **HOFFMANN EITLE**
**Patent- und Rechtsanwälte**
**Arabellastraße 4**
**81925 München (DE)**

(54) **SYSTEM FOR SUPPORTING DETERMINATION OF DELIVERY SYSTEM, SYSTEM FOR CREATING DELIVERY ROUTE, METHOD FOR SUPPORTING DETERMINATION OF DELIVERY SYSTEM, AND METHOD FOR CREATING DELIVERY ROUTE**

(57)     Articles are delivered to stores within a predetermined area in an economical and efficient manner. A route creation system 100 assists in determining, in cases where articles are to be delivered from a base 202 to respective stores 204 within an area including the base 202 and the stores 204, whether to deliver the articles by a delivery route system or whether to deliver the articles by a parcel delivery system, the delivery route system to sequentially deliver the articles from the base 202 to the respective stores 204 and return to the base 202, the parcel delivery system to outsource delivery of the articles to a parcel delivery company, based on cost calculation while examining a break-even point.

Fig.1

**Description**

TECHNICAL FIELD

The present invention relates to a system for assisting determination of delivery system, a route creation system, a method for assisting determination of delivery system, and a route creation method.

BACKGROUND ART

Patent Document 1 (Japanese Laid-Open Patent Publication No. 2004-127038) describes a system which divides a region, where a plurality of vending machines are installed, into service areas assigned to staffs who go round the vending machines. The system includes an initial setting unit that sets, in the region where the plurality of vending machines are installed, a plurality of areas each including at least one vending machine, corresponding to the number of staffs; a calculating unit that calculates statistics determined by characteristics of the vending machines included in the individual areas; and a processing unit that repeats a process of adding a vending machine to a specific area to thereby expand the area after selecting the specific area considering the statistics, stops the process if a predetermined condition is satisfied, and determines obtained areas as service areas of the plurality of staffs. In this way, the region where the plural vending machines are installed may be divided into the service areas so as to allow the individual staffs to efficiently go the rounds.

[Prior Art Documents]

[Patent Documents]

[Patent Document 1] Japanese Laid-Open Patent Publication No. 2004-127038

DISCLOSURE OF THE INVENTION

[Problems to be Solved by the Invention]

The technique described in Patent Document 1 is configured to calculate, using an approximation algorithm, an order of visiting according to which the stores included in a route may be visited by the shortest path, and thereby to create the route capable of efficiently going the rounds. However, for the case where the route includes some store extremely distant from a base, the technique has failed in creating an efficient route, even if it has succeeded in finding out the order along which the stores may be visited by the shortest path.
By the conventional technique, the delivery route has been created while paying attention only to go the rounds by the geographically shortest path on a map, or within the shortest time on the time basis. However, with a steep rise in fuel cost and increase in labor cost, it has been becoming more important to create not only the conventional route to go the rounds fast but also a cost-conscious, economical delivery route.
The present invention is devised in view of the above-described problems, and is aimed at providing a technique of delivering articles economically and efficiently to stores in a predetermined area.

[Means for Solving the Problems]

According to the present invention, there is provided a system for assisting determination of a delivery system, that assists in determining, in cases where articles are to be delivered from a base to respective stores within an area including the base and the stores, whether to deliver the articles by a delivery route system or whether to deliver the articles by a parcel delivery system, the delivery route system to sequentially deliver the articles from the base to the respective stores and return to the base, the parcel delivery system to outsource delivery of the articles to a parcel delivery company. The system includes: a base information storage unit that stores location information of the base; a store information storage unit that stores location information of the respective stores, amount of articles to be delivered to the respective stores, and working time at the respective stores in a manner related to the individual stores; a condition setting storage unit that stores working time per delivery route; a route cost accepting unit that accepts input of route cost necessary for the delivery route; a parcel delivery cost calculating unit that calculates parcel delivery cost per store when the articles are delivered by the parcel delivery system based on the amount of articles to be delivered to the respective stores; a number-of-deliverable-stores calculating unit that calculates the number of deliverable stores, representing the number of stores deliverable within the route cost when the articles are delivered by the parcel delivery system, based on the route cost and the parcel delivery cost per store; and a route range calculating unit that calculates a location range of the stores centered around the base, capable of keeping the number of stores per delivery route not smaller than the number of deliverable stores when the articles are delivered by the delivery route system, based on the number of deliverable stores, location information of the base, location information of the respective stores, working time at the respective stores, and working time per delivery route. The system for assisting in determination of delivery system is configured to propose to adopt the delivery route system for the delivery to the store within the location range and adopt the parcel delivery system for the delivery to the store outside the range.

According to the present invention, there is provided a method for assisting determination of a delivery system by a computer system, that assists in determining, in cases where articles are to be delivered from a base to respective stores within an area including the base and the stores, whether to deliver the articles by a delivery route system or whether to deliver the articles by a parcel delivery system, the delivery route system to sequentially deliver the articles from the base to the respective stores and return to the base, the parcel delivery system to outsource delivery of the articles to a parcel delivery company. The computer system includes: a base information storage unit that stores location information of the base; a store information storage unit that stores location information of the respective stores, amount of articles to be delivered to the respective stores, and working time at the respective stores in a manner related to the respective stores; a condition setting storage unit that stores working time per delivery route; a route cost accepting unit; a parcel delivery cost calculating unit; a number-of-deliverable-stores calculating unit; and a route range calculating unit. The method includes: a step of accepting input of route cost necessary for the delivery route, executed by the route cost accepting unit; a step of calculating parcel delivery cost per store when the articles are delivered by the parcel delivery system based on the amount of articles to be delivered to the respective stores, executed by the parcel delivery cost calculating unit; a step of calculating the number of deliverable stores, representing the number of stores deliverable within the route cost when the articles are delivered by the parcel delivery system, based on the route cost and the parcel delivery cost per store, executed by the number-of-deliverable-stores calculating unit; a step of calculating a location range of the stores centered around the base, capable of keeping the number of stores per delivery route not smaller than the number of deliverable stores when the articles are delivered by the delivery route system, based on the number of deliverable stores, location information of the base, location information of the respective stores, working time at the respective stores, and working time per delivery route, executed by the route range calculating unit; and a step of proposing to adopt the delivery route system for the delivery to the stores within the location range, and adopt the parcel delivery system for the delivery to the stores outside the range.

By virtue of the configurations described in the above, a borderline between the stores more economical when adopting the delivery route system and the stores more economical when adopting the parcel delivery system may be determined based characteristics of the stores included in the area.

According to the present invention, there is also provided a route creation system which includes: the system for assisting determination of a delivery system described in the above; and a route creation unit that creates a delivery route including the stores for which adoption of the delivery route system is proposed by the system for assisting determination of the delivery system.

According to the present invention, there is still also provided a method for creating a route by a computer system, that determines, in cases where articles are to be delivered from a base to respective stores within an area including the base and the stores, whether to deliver the articles by a delivery route system or whether to deliver the articles by a parcel delivery system, the delivery route system to sequentially deliver the articles from the base to the respective stores and return to the base, the parcel delivery system to outsource delivery of the articles to a parcel delivery company and creates a delivery route including the stores for which delivery by the delivery route system is determined. The computer system includes: a base information storage unit that stores location information of the base; a store information storage unit that stores location information of the respective stores, amount of articles to be delivered to the respective stores, and working time at the respective stores in a manner related to the respective stores; a condition setting storage unit that stores working time per delivery route; a route cost accepting unit; a parcel delivery cost calculating unit; a number-of-deliverable-stores calculating unit; a route range calculating unit; and a route creation unit. The method includes: a step of accepting input of route cost necessary for the delivery route, executed by the route cost accepting unit; a step of calculating parcel delivery cost per store when the articles are delivered by the parcel delivery system based on the amount of articles to be delivered to the respective stores, executed by the parcel delivery cost calculating unit; a step of calculating the number of deliverable stores, representing the number of stores deliverable within the route cost when the articles are delivered by the parcel delivery system, based on the route cost and parcel delivery cost per store, executed by the number-of-deliverable-stores calculating unit; a step of calculating a location range of the stores centered around the base, capable of keeping the number of stores per delivery route not smaller than the number of deliverable stores when the articles are delivered by the delivery route system, based on the number of deliverable stores, location information of the base, location information of the respective stores, working time at the respective stores, and working time per delivery route, executed by the route range calculating unit; a step of determining the delivery route system for the delivery to the stores within the location range, and determining the parcel delivery system for the delivery to the stores outside the range; and a step of creating a delivery route including the stores for which of the delivery by the delivery route system is determined.

By virtue of these configurations, the articles may be delivered to the stores within a predetermined area, in an economical and efficient manner.

Note that also arbitrary combinations of the above-described constituents, and any exchanges of expressions in the present invention, made among method, apparatus, system, recording medium, computer program and so forth, are valid as embodiments of the present invention.

[Effect of the Invention]

According to the present invention, the articles may be delivered to the stores with a predetermined area, in an economical and efficient manner.

BRIEF DESCRIPTION OF THE DRAWINGS

The above and other objects, features and advantages of the present invention will be more apparent from the following description of certain preferred embodiments taken in conjunction with the accompanying drawings.
FIG. 1 is a drawing schematically illustrating an area which includes a base and a plurality of stores;
FIG. 2 is a drawing illustrating a state of setting of a route range in the area;
FIG. 3 is a block diagram illustrating an exemplary configuration of a route creation system according to an embodiment of the present invention;
FIG. 4 is a drawing illustrating a part of data structure of a store information storage unit according to an embodiment of the present invention; and
FIG. 5 is a flow chart illustrating procedures of processing executed by a route creation system according to an embodiment of the present invention.

DETAILED DESCRIPTION

Embodiments of the present invention will be explained below, referring to the attached drawings. Note that, in all drawings, all similar constituents will be given similar reference numerals or symbols, so as to appropriately avoid repetitive explanation.
As described in the above, it has been becoming more important to create a cost-conscious, economical delivery route. For an exemplary case where all processes of delivery to the stores in an area are self-managed, a cost-conscious strategy will be necessary in order to cope with fuel cost which keeps on rising. From this point of view, it may be important to predominantly visit destinations of delivery which reside closer to a start point such as base or delivery depot.
In addition, bias of the amount of delivery among the stores has recently been becoming more distinctive. In other words, bipolarization between the stores characterized by a large amount of delivery and the stores characterized by a small amount of delivery has been becoming distinctive. For this reason, it has been becoming more important to take the stores, characterized by large amount of delivery or large order, into account even if the stores are distant from the start point such as base or delivery depot.
On the other hand, parcel delivery service available for individually ordering delivery of articles has recently been developing. The parcel delivery service adopts "area-wise flat-rate system" by which pricing does not depend on distance of delivery. For example, the delivery cost is set constant over a certain broad range such as covering the Kanto area, Chubu area, Kansai area and so forth. Accordingly, it may be advantageous to adopt such parcel delivery service for delivery to the destinations distant from the start point such as base or delivery depot, so far as they fall in the range of "area-wise flat-rate system".
Moreover, the number of stores as a destination of delivery has drastically been increasing and decreasing in recent years. In particular, in the license distribution business such as dealing cigarettes, liquors and so forth, such increase and decrease are very frequently found. Increase or decrease in the number of destinations of delivery affects the geological distribution of the stores which require delivery within the area, and also affects the cost. Adoption of a flexible system of delivery may therefore be desired.
From this point view, the present inventors thought that it may be very important to adopt a hybrid system of self-managed delivery and parcel delivery service, and also that it may be important to determine a critical line, by which economical efficiency of adoption of the self-managed delivery and parcel delivery service is comparatively judged, and to consider intension-specific process and extension-specific process. For example, in the intension of the critical line, cost-conscious consideration of the individual parameters may be important.
Considering the above-described situation, the present inventors derived a system and a method for creating a delivery route, by embodying an approach from an "economical viewpoint" represented by a "break-even point" between the fixed delivery route type and the shift type to the parcel delivery to create a delivery route. Specific approach will be explained below.

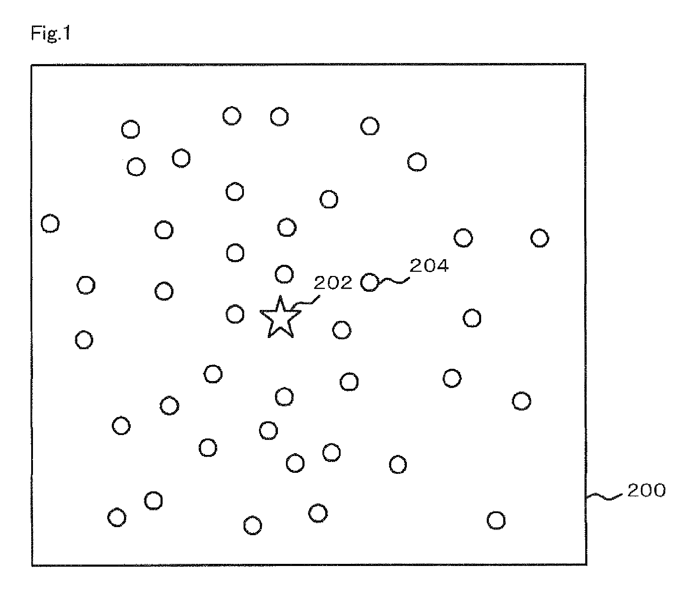

FIG. 1 is a drawing schematically illustrating an area 200 which includes a base 202 and a plurality of stores 204. In this embodiment, the stores 204 may typically be convenience stores and supermarkets.

When creating a delivery route to deliver articles to the individual stores 204 in the area 200, time required for delivering the articles to the individual stores 204 included in the delivery route (route time) is given by a total of travel time from the base 202 to a certain store 204, store-to-store travel time, travel time from certain another store 204 to the base 202, and working time at the individual stores 204. Assuming now that average values in the area 200 are used for the individual time, the route time may be calculated by the formula below. In the formula, average in-store working time represents an average value of the working time at the individual stores 204 in the area 200. The average store-to-store travel time represents an average value of the travel time between the stores 204 in the area 200. The average between-store-and-base travel time represents an average value of travel time between each store 204 and the base 202 in the area 200.

Route time = Number of stores × (Average in-store working time + Average store-to-store travel time) + Average between-store-and-base travel time × 2 - Average store-to-store travel time

The present inventors contemplated that it would be important to shorten the average between-store-and-base travel time, in view of delivery to a larger number of stores 204 in a same route time, according to the formula in the above. More specifically, given that the route time is constant, a larger number of stores 204 may be included in the delivery route, by predominantly including the stores 204 closer to the base 202.

On the other hand, for the stores distant from the base 202 but the delivery cost thereof based on the parcel delivery service falls in a predetermined range, adoption of the parcel delivery service may otherwise be more economical.

The present inventors contemplated that the articles may be delivered to the stores 204 within the area 200 in an economical and efficient manner, by determining a break-even point (critical line) while considering and comparing the delivery route system to be included in the delivery route and the parcel delivery system making use of the parcel delivery service, and finally reached the present invention. More specifically, the present invention is configured to determine whether to deliver the articles by the delivery route system or by the parcel delivery system, depending on the travel time of the individual stores from the base 202.

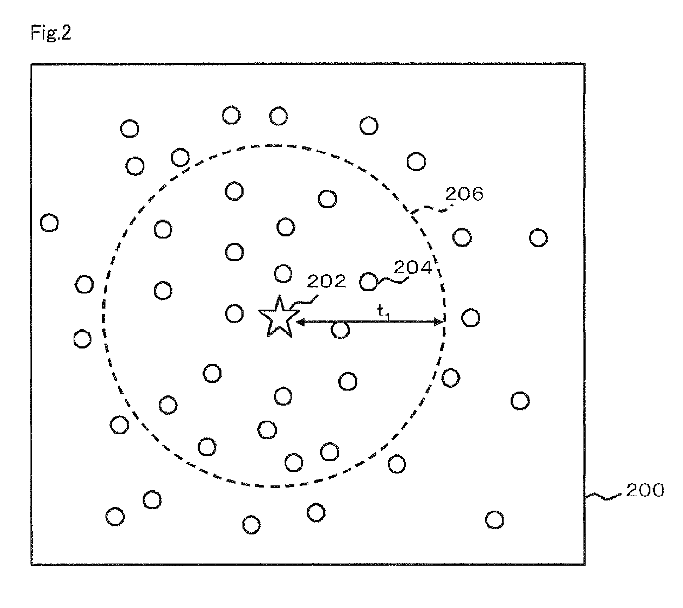

In this embodiment, based on characteristics, such as location information, of the stores 204 included in the area 200, a borderline between the stores 204 more economical when adopting the delivery route system and the stores 204 more economical when adopting the parcel delivery system, is determined. FIG. 2 illustrates a route range 206 which indicates a location range of the stores 204 more economical when adopting the delivery route system. The route range 206 indicates an area where travel time from the base 202 is $t_1$. The articles may be delivered by the delivery route system to the stores 204 to which the travel time from the base 202 are not longer than $t_1$. While the route range 206 herein is given in a form of perfect circle, travel distance over which a staff can move from the base to each store within travel time $t_1$ may vary, typically depending on traffic conditions of road along which the staff moves from the base 202 to each store 204. The route range 206 may therefore be given by an isoline which indicates the distance from the base 202 to each store along which the staff can move within travel time $t_1$, and may be given by various forms.

In this embodiment, the area 200 may be set within a range in which the delivery cost may be kept constant irrespective of the distance, for the case where the articles are delivered to the individual stores 204 by the parcel delivery system. In other words, in this embodiment, the parcel delivery cost required for the case where the parcel delivery system is adopted does not depend on the distance of the individual stores 204 from the base 202, but depends on the quantity of articles (packages) to be delivered to the individual stores 204.

A method of calculating travel time $t_1$ from the base 202 will be explained below.

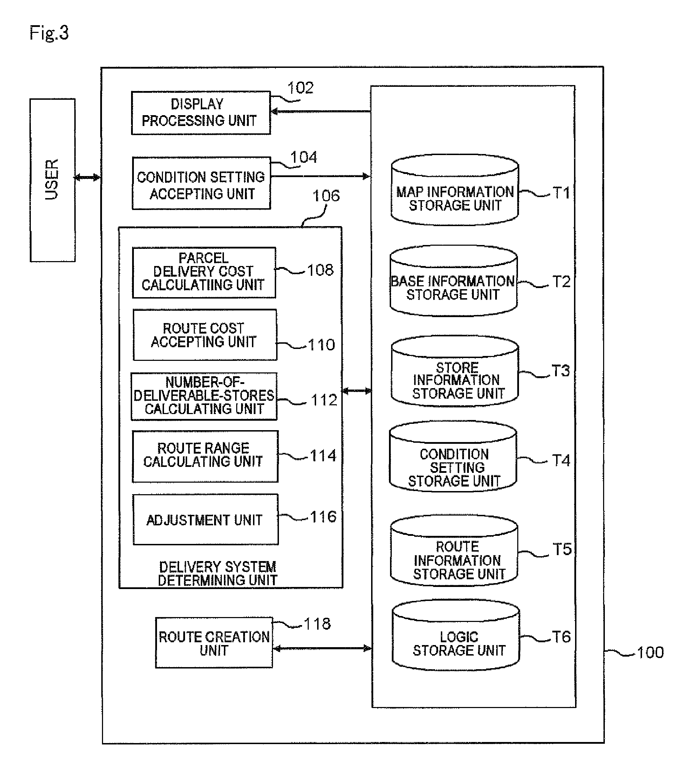

FIG. 3 is a block diagram illustrating a configuration of a route creation system 100 in this embodiment. The route creation system 100 includes a display processing unit 102, a condition setting accepting unit 104, a delivery system determining unit 106, a route creation unit 118, a map information storage unit T1, a base information storage unit T2, a store information storage unit T3, a condition setting storage unit T4, a route information storage unit T5, and a logic storage unit T6. The delivery system determining unit 106 includes a parcel delivery cost calculating unit 108, a route cost accepting unit 110, a number-of-deliverable-stores calculating unit 112, a route range calculating unit 114, and an adjustment unit 116.

The display processing unit 102 takes part in process for displaying various data or state of created route on a screen (not illustrated) together with map information.

The condition setting accepting unit 104 accepts inputs of setting of various conditions necessary for determining or proposing the delivery system from the user. For example, the condition setting accepting unit 104 accepts inputs of route cost necessary per route, working time per route, time for loading articles at the base, break time, working time after coming back to the base, standard store-to-store travel speed, standard between-base-and-store travel speed, calculation formula of the parcel delivery cost when the parcel delivery system is adopted, and so forth.

The condition setting accepting unit 104 also accepts inputs of setting of various conditions necessary for creating a route from the user. The condition setting accepting unit 104 accepts inputs of setting of conditions which include maximum load and minimum load on truck when the delivery route system is adopted, allowable loading ratio, and upper and lower limits of route time. The condition setting storage unit T4 stores the thus-set conditions.

The map information storage unit T1 stores map information data regarding the region for which a route is created. The base information storage unit T2 stores base information data. The base information data includes an identification code of the base, the name of the base, location of the base (latitude and longitude, or X-coordinate and Y-coordinate). The base herein means a base of delivery, such as a distribution center, in the region. The logic storage unit T6 stores logic in relation to various procedures of processing. The route information storage unit T5 stores information of the route created by the route creation unit 118.

The store information storage unit T3 stores store information data. The store information data includes store-related information such as an identification code of the base, identification code of the stores, name of the stores, location of the stores (latitude, longitude and height, or X-coordinate, Y-coordinate and Z-coordinate), amount of delivery (t) per visit, working time per visit (min), monthly sales (yen), and monthly amounts of selling (packages) for each article.

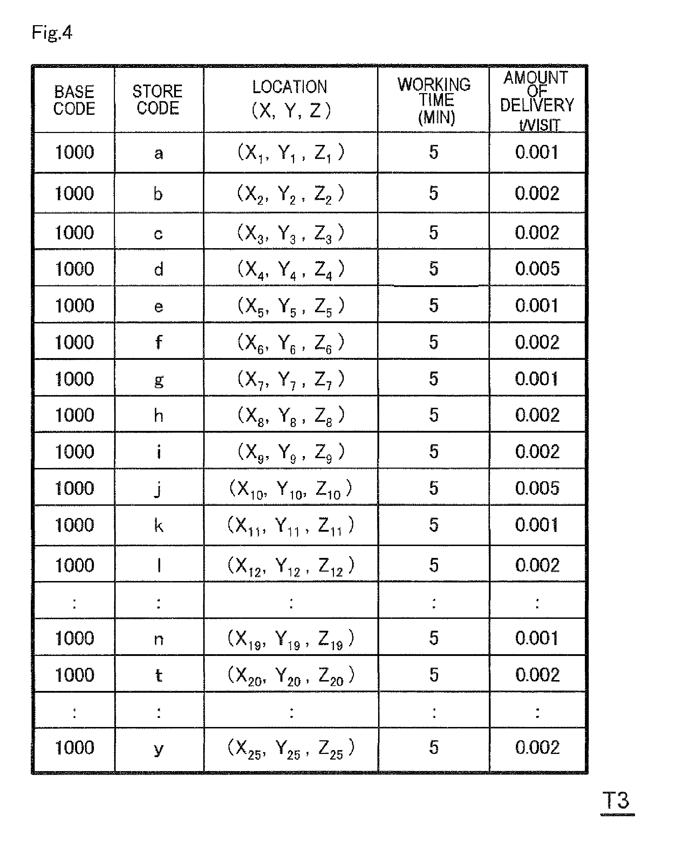

FIG. 4 is a drawing illustrating a part of data structure in the store information storage unit T3 according to this embodiment.
The store information storage unit T3 herein includes a "base code" column, a "store code" column, a "location" column, a "working time" column, and an "amount of delivery" column. In the illustrated example, a store having store code "a" belongs to a base having base code "1000" and located at "$(X_1, Y_1, Z_1)$". The working time at the store is "5 minutes", and the amount of delivery per visit is "0.001 t".

The parcel delivery cost calculating unit 108 calculates the parcel delivery cost per store, based on the amount of articles to be delivered to each store, when delivery of the articles to all stores included in the area was outsourced to an outside parcel delivery company. In this embodiment, parcel delivery cost A per store may be calculated by the procedures below:

(1) calculate average amount of delivery (t) per visit for the individual stores within the area;
(2) calculate an average number of articles n per visit to the individual stores within the area, based on the average amount of delivery (t); and
(3) calculate the parcel delivery cost A per store within the area, based on the average number of articles n.

A formula for calculating the parcel delivery cost per store within the area may typically be given as below, while depending on pricing strategy by the parcel delivery company to be employed. In this example, discount pricing will be adopted to the second and succeeding articles, for the case where the articles are delivered to the same store at the same time, and an additional cost such as cash-on-delivery fee is required for each delivery.

Parcel delivery cost A per store = cost $B_1$ for first article + cost $B_2$ for second and succeeding articles $\times$ (n-1) additional cost C such as cash-on-delivery fee

The route cost accepting unit 110 accepts an input of route cost necessary for a single route along which a staff starts from the base, sequentially delivers the articles to a plurality of stores, and returns to the base. The route cost may vary depending on the working time per route to be assumed. It may preliminarily be determined based on, for example, labor cost of a staff per route, fuel cost and vehicle cost, while assuming working time per route as 8 hours, and travel distance as approximately 80 km. It may also be possible to outsource the route delivery to an outside carrier. In this case, the assumption may adopt a standard outsourcing cost (approximately 8 hours/80 km) for each carrier available in each area.

It assumes that the route cost necessary per route is D yen. The number-of-deliverable-stores calculating unit 112 calculates the number of deliverable stores E which indicates the number of stores deliverable by the outside parcel delivery company within the route cost, based on the route cost D and the parcel delivery cost A per store. The number of deliverable stores E may be calculated by the formula below.

$$\text{Number of deliverable stores E} = \text{Route cost D/Parcel delivery cost A} = D/(B_1 + B_2 \times (n-1) + C)$$

The route range calculating unit 114 calculates a range of stores 204 more economical when adopting the delivery route system, based on the number of deliverable stores, location information of the base, location information of the individual stores, the amount of articles to be delivered to the individual stores, and working time at the individual stores. More specifically, the route range calculating unit 114 subtracts total time other than the between-base-and-store travel time from the route time, to thereby calculate a marginal between-base-and-store travel time according to which the delivery route system can exhibit a cost performance superior to that of the parcel delivery system. The marginal between-base-and-store travel time corresponds to travel time $t_1$ from the base 202 illustrated in FIG. 2.

For the case where the articles are delivered to the individual stores by the delivery route system, the number of stores possibly included in one route may be calculated by the formula below:

Number of stores F per route = (Working time per route G - average between-store-and-base travel time H $\times$ 2 + Average store-to-store travel time I)/(Average in-store working time J + Average store-to-store travel time I)

It may now be understood that the adoption of the route delivery system is more economically effective when the number of stores F per route is not smaller than the number of deliverable stores E. From the finding, the expression below may be derived.

Number of deliverable stores E ≤ Number of stores F per route = (working time per route G - Average between-store-and-base travel time H $\times$ 2 + Average store-to-store travel time 1)/(Average in-store working time J + Average store-to-store travel time I)

The expression in the above may be rearranged to give the expression below:

Average between-store-and-base travel time H ≤ (Working time per route G + Average store-to-store travel time I - Number of deliverable stores E $\times$ (Average in-store working time J + Average store-to-store travel time I))/2

The average between-store-and-base travel time H which satisfies the expression in the above corresponds to travel time $t_1$ from the base 202 illustrated in FIG. 2.

Next, specific examples will be explained.
Assuming, for example, route cost D = 30000 yen and parcel delivery cost A = 1100 yen, then the number of deliverable stores E = 27.3 (stores) will be given. In other words, 27.3 stores may be deliverable, if the parcel delivery system were adopted at route cost D required for delivery per route.

On the other hand, assuming working time per route G = 7 hours, average store-to-store travel time I = 10 minutes and average in-store working time J = 2 minutes, then between-store-and-base travel time H ≤ 51.2 minutes will be given. Accordingly, the travel time $t_1$ from the base 202 illustrated in FIG. 2 is given as 51.2 minutes.

By the way, for the case where the delivery is outsourced to an outside parcel delivery company, discount fee wherein larger number of articles to be committed, the lower the fee becomes, may sometimes be adopted depending on the pricing strategy of the parcel delivery company. For an exemplary case where the number of deliverable stores E is calculated by the above-described process, the fee, which is adopted to the total number of articles to be delivered to all stores within the area 200 by the parcel delivery system, may be available. On the other hand, the total number of articles actually delivered by the parcel delivery system after the calculation of the travel time $t_1$ will be that for the stores which fall outside the range of travel time $t_1$.

The adjustment unit 116 judges, after the travel time $t_1$ was calculated, whether the fee remains unchanged or not, based on the amount of delivery (packages) of the articles to the stores to which the travel time is longer than the travel time $t_1$. If the fee was found to remain unchanged, the process comes to the end. On the other hand, for the case where the fee was found to change as a result of decrease in the amount of articles to be delivered to the stores, and where the parcel delivery cost A per store was found to increase, the adjustment unit 116 proceeds the adjustment as described below. First, the newly-calculated parcel delivery cost A per store is re-calculated, and also the number of deliverable stores E is re-calculated, based on the parcel delivery cost A. Next, based on the number of deliverable stores E, also travel time $t_1$ is re-calculated. Even after the re-calculation of the travel time $t_1$, the adjustment unit 116 repeats the same process until the parcel delivery cost A per store is found to remain unchanged.

In this embodiment, the delivery system determining unit 106 may determine the delivery route system for the stores which are found to have the travel time from the base not longer than the thus-calculated travel time $t_1$, and may determine the parcel delivery system for the stores which are found to have the travel time from the base longer than the thus-calculated travel time $t_1$.

The route creation unit 118 creates a delivery route which includes the stores for which adoption of the delivery route system was determined by the delivery system determining unit 106. The route creation unit 118 may create the delivery route, typically by the procedures similar to those described in Patent Document 1. Although not specifically limited, the route creation unit 118 may create the delivery route, by sequentially incorporating the stores for which adoption of the delivery route system are determined by the delivery system determining unit 106, until the route time reaches the upper limit, and by optimizing the order of delivery.

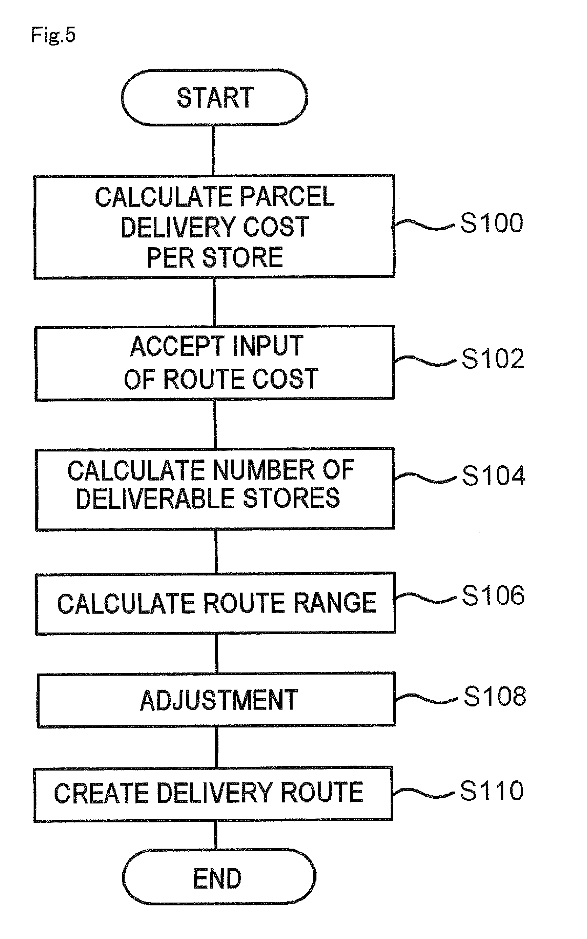

FIG. 5 is a flow chart illustrating procedures of processing executed by the route creation system 100 of this embodiment.
First, the parcel delivery cost calculating unit 108 calculates the parcel delivery cost per store (step S100). Next, the route cost accepting unit 110 accepts an input of the route cost (step S102). The number-of-deliverable-stores calculating unit 112 calculates the number of deliverable stores (step S104). The route range calculating unit 114 then calculates the route range (step S106). Next, the adjustment unit 116 judges whether the fee remains unchanged, based on the amount of delivery (packages) of the articles to the stores which fall outside the route range. If the fee is found to remain unchanged, the process comes to the end. On the other hand, for the case where the fee is found to change as a result of decrease in the amount of articles to be delivered to the stores, and where the parcel delivery cost A per store is found to increase, the adjustment unit 116 re-calculates parcel delivery cost A, the number of deliverable stores E and travel time $t_1$ (step S108). Even after the re-calculation of the travel time $t_1$, the adjustment unit 116 repeats the same process until parcel delivery cost A per store is confirmed to remain unchanged. Next, the route creation unit 118 creates a delivery route with respect to the stores which falls in the route range (step S110).

According to the route creation system 100 of this embodiment, it is judged whether the delivery becomes more economical by the delivery route system or by the parcel delivery system, and a delivery route is created so as to include only the stores judged as more economical when adopting the delivery route system. In short, in the process of creating the delivery route, a break-even point with respect to the case where the parcel delivery system is adopted, may be determined. Accordingly, the articles may be delivered to the stores within a predetermined area economically and efficiently.

With recent increase in the utilization rate of convenience stores, amount of dealing of various commodities at the convenience stores has been increasing. A lot of convenience stores manage the commodities in a systematic manner, or strictly designate the time of delivery. The delivery of the articles to such stores has, therefore, been becoming more important to be punctual about the designated time. It is contemplated that longer travel time from the base is more likely to cause time lag. For this reason, if the stores having long travel time from the base are included in a delivery route, it is more likely to cause delay in the delivery time. Now, by excluding, from the delivery route, such stores having long travel time from the base, this embodiment may also be able to reduce possibility of causing time lag of delivery.

The individual constituents of the route creation system 100 illustrated in FIG. 1 represent functional blocks, rather than configurations on the hardware basis. The individual constituents of the route creation system 100 may be embodied by arbitrary combinations of hardware and software, typified by CPU of arbitrary computer, memory, program loaded on the memory so as to embody the constituents illustrated in the drawing, storage units for storing the program such as hard disk, and interface for network connection. It may be understood by those skilled in the art that methods and apparatuses for the embodiment allows various modifications.

The present invention was explained in the above referring to the embodiments. Those skilled in the art will recognize that the embodiments are described merely for exemplary purposes, while allowing various modified combinations of the individual constituents and the individual processes, and that also such modifications fall within the scope of the present invention.

While the embodiments described in the above dealt with the route creation system 100, it may also be possible to configure a system for assisting determination of delivery system, as the configuration without using the route creation unit 118 illustrated in FIG. 3. For example, it may also be possible to set only the route range in the area, and to make some other system create the delivery route.

## Claims

1. A system for assisting determination of a delivery system, that assists in determining, in cases where articles are to be delivered from a base to respective stores within an area including the base and the stores, whether to deliver the articles by a delivery route system or whether to deliver the articles by a parcel delivery system, the delivery route system to sequentially deliver the articles from the base to the respective stores and return to the base, the parcel delivery system to outsource delivery of the articles to a parcel delivery company, said system comprising:

   a base information storage unit that stores location information of the base;
   a store information storage unit that stores location information of the respective stores, amount of articles to be delivered to the respective stores, and working time at the respective stores in a manner related to the respective stores;
   a condition setting storage unit that stores working time per delivery route;
   a route cost accepting unit that accepts input of route cost necessary for the delivery route;
   a parcel delivery cost calculating unit that calculates parcel delivery cost per store when the articles are delivered by the parcel delivery system based on the amount of articles to be delivered to the respective stores;
   a number-of-deliverable-stores calculating unit that calculates the number of deliverable stores, representing the number of stores deliverable within the route cost when the articles are delivered by the parcel delivery system, based on the route cost and the parcel delivery cost per store; and
   a route range calculating unit that calculates a location range of the stores centered around the base, capable of keeping the number of stores per delivery route not smaller than the number of deliverable stores when the articles are delivered by the delivery route system, based on the number of deliverable stores, location information of the base, location information of the respective stores, working time at the respective stores, and working time per delivery route, wherein
said system is configured to propose to adopt the delivery route system for the delivery to the stores within the location range, and adopt the parcel delivery system for the delivery to the stores outside the range.

2. The system for assisting determination of delivery system according to Claim 1,
wherein said parcel delivery cost calculating unit calculates parcel delivery cost per store when the articles are delivered to all of the stores included in the area by the parcel delivery system, based on the amount of articles to be delivered to the respective stores.

3. The system for assisting determination of delivery system according to Claim 1 or 2;
wherein the area is set within a range over which a delivery cost is constant depending to a distance necessary for delivering the articles from the base to the respective stores by the parcel delivery system.

4. The system for assisting determination of delivery system according to any one of Claims 1 to 3,
wherein said route range calculating unit calculates travel time from the base, as the location range of the stores.

5. The system for assisting determination of delivery system according to any one of Claims 1 to 3,
wherein said route range calculating unit calculates travel time $t_1$ from the base, as the location range of the stores, based on the formula below:

Travel time $t_1$ = (Working time per route G + average store-to-store travel time I - Number of deliverable stores E $\times$ (Average in-store working time J + Average store-to-store travel time I))/2

6. A route creation system comprising:

said system for assisting determination of delivery system according to any one of Claims 1 to 5; and
a route creation unit that creates a delivery route including the stores for which adoption of the delivery route system is proposed by said system for assisting determination of delivery system.

7. A method for assisting determination of a delivery system by a computer system, that assists in determining, in cases where articles are to be delivered from a base to respective stores within an area including the base and the stores, whether to deliver the articles by a delivery route system or whether to deliver the articles by a parcel delivery system, the delivery route system to sequentially deliver the articles from the base to the respective stores and return to the base, the parcel delivery system to outsource delivery of the articles to a parcel delivery company, said computer system comprising:

a base information storage unit that stores location information of the base;
a store information storage unit that stores location information of the respective stores, amount of articles to be delivered to the respective stores, and working time at the respective stores in a manner related to the respective stores;
a condition setting storage unit that stores working time per delivery route;
a route cost accepting unit;
a parcel delivery cost calculating unit;
a number-of-deliverable-stores calculating unit; and
a route range calculating unit, and
said method including:

a step of accepting input of route cost necessary for the delivery route, executed by said route cost accepting unit;
a step of calculating parcel delivery cost per store when the articles are delivered by the parcel delivery system based on the amount of articles to be delivered to the respective stores, executed by said parcel delivery cost calculating unit;
a step of calculating the number of deliverable stores, representing the number of stores deliverable within the route cost when the articles are delivered by the parcel delivery system, based on the route cost and the parcel delivery cost per store, executed by said number-of-deliverable-stores calculating unit;
a step of calculating a location range of the stores centered around the base, capable of keeping the number of stores per delivery route not smaller than the number of deliverable stores when the articles are delivered by the delivery route system, based on the number of deliverable stores, location information of the base, location information of the respective stores, working time at the respective stores, and working time per delivery route, executed by said route range calculating unit; and

a step of proposing to adopt the delivery route system for the delivery to the stores within the location range, and adopt the parcel delivery system for the delivery to the stores outside the range.

8. A method for creating a route by a computer system, that determines, in cases where articles are to be delivered from a base to respective stores within an area including the base and the stores, whether to deliver the articles by a delivery route system or whether to deliver the articles by a parcel delivery system, the delivery route system to sequentially deliver the articles from the base to the respective stores and return to the base, the parcel delivery system to outsource delivery of the articles to a parcel delivery company and creates a delivery route including the stores for which delivery by the delivery route system is determined,

said computer system comprising:

a base information storage unit that stores location information of the base;
a store information storage unit that stores location information of the respective stores, amount of articles to be delivered to the respective stores, and working time at the respective stores in a manner related to the respective stores;
a condition setting storage unit that stores working time per delivery route;
a route cost accepting unit;
a parcel delivery cost calculating unit;
a number-of-deliverable-stores calculating unit;
a route range calculating unit; and
a route creation unit, and

said method comprising:

a step of accepting input of route cost necessary for the delivery route, executed by said route cost accepting unit;
a step of calculating parcel delivery cost per store when the articles are delivered by the parcel delivery system based on the amount of articles to be delivered to the respective stores, executed by said parcel delivery cost calculating unit;
a step of calculating the number of deliverable stores, representing the number of stores deliverable within the route cost when the articles are delivered by the parcel delivery system, based on the route cost and parcel delivery cost per store, executed by said number-of-deliverable-stores calculating unit;
a step of calculating a location range of the stores centered around the base, capable of keeping the number of stores per delivery route not smaller than the number of deliverable stores when the articles are delivered by the delivery route system, based on the number of deliverable stores, location information of the base, location information of the respective stores, working time at the respective stores, and working time per delivery route, executed by said route range calculating unit;
a step of determining the delivery route system for the delivery to the stores within the location range, and determining the parcel delivery system for the delivery to the stores outside the range; and
a step of creating a delivery route including the stores for which the delivery by the delivery route system is determined.

9. A program for assisting in determining, in cases where articles are to be delivered from a base to respective stores within an area including the base and the stores, whether to deliver the articles by a delivery route system or whether to deliver the articles by a parcel delivery system, the delivery route system to sequentially deliver the articles from the base to the respective stores and return to the base, the parcel delivery system to outsource delivery of the articles to a parcel delivery company,

said program being configured to make a computer function as:

a base information storage unit that stores location information of the base;
a store information storage unit that stores location information of the respective stores, amount of articles to be delivered to the respective stores, and working time at the respective stores in a manner related to the respective stores;
a condition setting storage unit that stores working time per delivery route;
a route cost accepting unit that accepts input of route cost necessary for the delivery route;

a parcel delivery cost calculating unit that calculates parcel delivery cost per store when the articles are delivered by the parcel delivery system based on the amount of articles to be delivered to the respective stores,

a number-of-deliverable-stores calculating unit that calculates the number of deliverable stores, representing the number of stores deliverable within the route cost when the articles are delivered by the parcel delivery system, based on the route cost and parcel delivery cost per store; and

a route range calculating unit that calculates a location range of the stores centered around the base, capable of keeping the number of stores per delivery route not smaller than the number of deliverable stores when articles are delivered by the delivery route system, based on the number of deliverable stores, location information of the base, location information of the respective stores, working time at the respective stores, and working time per delivery route, wherein

said program proposes to adopt the delivery route system for the delivery to the stores within the location range, and adopt the parcel delivery system for the delivery to the stores outside the range.

Fig.1

Fig.2

Fig.3

USER

DISPLAY
PROCESSING UNIT                    102

CONDITION SETTING
ACCEPTING UNIT                     104

                                   106

PARCEL
DELIVERY COST
CALCULATIING UNIT                  108

ROUTE COST
ACCEPTING UNIT                     110

NUMBER-OF-
DELIVERABLE-STORES                 112
CALCULATING UNIT

ROUTE RANGE
CALCULATING UNIT                   114

ADJUSTMENT UNIT                    116

DELIVERY SYSTEM
DETERMINING UNIT

ROUTE CREATION
UNIT                               118

MAP INFORMATION
STORAGE UNIT                       T1

BASE INFORMATION
STORAGE UNIT                       T2

STORE
INFORMATION                        T3
STORAGE UNIT

CONDITION
SETTING                            T4
STORAGE UNIT

ROUTE
INFORMATION                        T5
STORAGE UNIT

LOGIC
STORAGE UNIT                       T6

100

Fig.4

| BASE CODE | STORE CODE | LOCATION $(X, Y, Z)$ | WORKING TIME (MIN) | AMOUNT OF DELIVERY t/VISIT |
|---|---|---|---|---|
| 1000 | a | $(X_1, Y_1, Z_1)$ | 5 | 0.001 |
| 1000 | b | $(X_2, Y_2, Z_2)$ | 5 | 0.002 |
| 1000 | c | $(X_3, Y_3, Z_3)$ | 5 | 0.002 |
| 1000 | d | $(X_4, Y_4, Z_4)$ | 5 | 0.005 |
| 1000 | e | $(X_5, Y_5, Z_5)$ | 5 | 0.001 |
| 1000 | f | $(X_6, Y_6, Z_6)$ | 5 | 0.002 |
| 1000 | g | $(X_7, Y_7, Z_7)$ | 5 | 0.001 |
| 1000 | h | $(X_8, Y_8, Z_8)$ | 5 | 0.002 |
| 1000 | i | $(X_9, Y_9, Z_9)$ | 5 | 0.002 |
| 1000 | j | $(X_{10}, Y_{10}, Z_{10})$ | 5 | 0.005 |
| 1000 | k | $(X_{11}, Y_{11}, Z_{11})$ | 5 | 0.001 |
| 1000 | l | $(X_{12}, Y_{12}, Z_{12})$ | 5 | 0.002 |
| ⋮ | ⋮ | ⋮ | ⋮ | ⋮ |
| 1000 | n | $(X_{19}, Y_{19}, Z_{19})$ | 5 | 0.001 |
| 1000 | t | $(X_{20}, Y_{20}, Z_{20})$ | 5 | 0.002 |
| ⋮ | ⋮ | ⋮ | ⋮ | ⋮ |
| 1000 | y | $(X_{25}, Y_{25}, Z_{25})$ | 5 | 0.002 |

T3

Fig.5

```
        ┌─────────────┐
        │    START    │
        └──────┬──────┘
               │
   ┌───────────────────────┐
   │   CALCULATE PARCEL    │
   │    DELIVERY COST      │──── S100
   │      PER STORE        │
   └───────────┬───────────┘
               │
   ┌───────────────────────┐
   │     ACCEPT INPUT      │──── S102
   │    OF ROUTE COST      │
   └───────────┬───────────┘
               │
   ┌───────────────────────┐
   │  CALCULATE NUMBER OF  │──── S104
   │  DELIVERABLE STORES   │
   └───────────┬───────────┘
               │
   ┌───────────────────────┐
   │ CALCULATE ROUTE RANGE │──── S106
   └───────────┬───────────┘
               │
   ┌───────────────────────┐
   │      ADJUSTMENT       │──── S108
   └───────────┬───────────┘
               │
   ┌───────────────────────┐
   │ CREATE DELIVERY ROUTE │──── S110
   └───────────┬───────────┘
               │
        ┌─────────────┐
        │     END     │
        └─────────────┘
```

<div align="center">

**INTERNATIONAL SEARCH REPORT**

</div>

| International application No. |
| --- |
| PCT/JP2009/004931 |

**A. CLASSIFICATION OF SUBJECT MATTER**
*G06Q50/00*(2006.01)i, *B65G61/00*(2006.01)i

According to International Patent Classification (IPC) or to both national classification and IPC

**B. FIELDS SEARCHED**

Minimum documentation searched (classification system followed by classification symbols)
G06Q50/00, B65G61/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)
JSTPlus(JDreamII), JST7580(JDreamII)

**C. DOCUMENTS CONSIDERED TO BE RELEVANT**

| Category* | Citation of document, with indication, where appropriate, of the relevant passages | Relevant to claim No. |
| --- | --- | --- |
| A | Akihiro IMABORI et al., "Gaibu Itaku o Koryo shita Fukusu Depot Jokyoka deno Jikanwaku Tsuki Haiso Keikaku Mondai", Nippon Logistics System Gakkaishi, vol.6, no.2, Nippon Logistics System Gakkai, 26 April 2006 (26.04.2006), pages 25 to 32 | 1-9 |
| A | Haruki INOUE et al., "Jitsujikan Supply Chain Yuhaiso Keikaku System no Kaihatsu", Nippon Logistics System Gakkaishi, vol.6, no.2, Nippon Logistics System Gakkai, 26 April 2006 (26.04. 2006), pages 15 to 24 | 1-9 |
| A | Tadashi KURATA, "Haitatsu Keiro Saitekika no Algorithm ni Tsuite", IPSJ SIG Notes, vol.2002, no.83, Information Processing Society of Japan, 03 September 2002 (03.09.2002), pages 29 to 36 | 1-9 |

| ☒ | Further documents are listed in the continuation of Box C. | ☐ | See patent family annex. |
| --- | --- | --- | --- |

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>24 November, 2009 (24.11.09) | Date of mailing of the international search report<br>01 December, 2009 (01.12.09) |
| --- | --- |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2009/004931

C (Continuation).   DOCUMENTS CONSIDERED TO BE RELEVANT

| Category* | Citation of document, with indication, where appropriate, of the relevant passages | Relevant to claim No. |
|---|---|---|
| A | Nobuyuki NISHIUCHI et al., "Fukusu Sharyo ni yoru Fukusu Buntan Keikaku ni Kansuru Kenkyu", Japan Industrial Management Association Heisei 19 Nendo Shuki Kenkyu Taikai Yokoshu, Japan Industrial Management Association, 20 October 2007 (20.10.2007), pages 204 to 205 | 1-9 |
| A | Ken'ya MURAKAMI et al., "VMI ni yoru Jido Hanbaiki Hoju Haiso Simulation", Fuji Electric Journal, vol.74, no.6, Fuji Electric Co., Ltd., 10 June 2001 (10.06.2001), pages 25 to 28 | 1-9 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004127038 A